Europäisches Patentamt

European Patent Office

Office européen des brevets

(11) Publication number: **0 038 113**
**B1**

(12) **EUROPEAN PATENT SPECIFICATION**

(45) Date of publication of patent specification: **23.07.86**  (51) Int. Cl.⁴: **B 60 K 41/02**

(21) Application number: **81300565.9**

(22) Date of filing: **12.02.81**

(54) Clutch control apparatus.

(30) Priority: **18.02.80 GB 8005373**
**04.11.80 GB 8035377**

(43) Date of publication of application:
**21.10.81 Bulletin 81/42**

(45) Publication of the grant of the patent:
**23.07.86 Bulletin 86/30**

(84) Designated Contracting States:
**DE FR IT**

(56) References cited:
**FR-A-1 366 732**
**FR-A-1 476 022**
**GB-A- 718 016**
**GB-A-2 012 892**
**US-A-3 134 470**
**US-A-3 710 630**
**US-A-4 081 065**

(73) Proprietor: **AUTOMOTIVE PRODUCTS PUBLIC**
**LIMITED COMPANY**
**Tachbrook Road**
**Leamington Spa Warwickshire CV31 3ER (GB)**

(72) Inventor: **Norris, Peter John**
**32 The Crofts**
**St. Bees Cumbria (GB)**
Inventor: **Parker, Frederick John**
**289 Alwyn Road**
**Rugby (GB)**
Inventor: **Windsor, Harry Mellows**
**5 Park Lane Harbury**
**Leamington Spa Warwickshire (GB)**

Courier Press, Leamington Spa, England.

## Description

This invention relates to a control system for a clutch of the transmission of an engine driven vehicle for starting the vehicle from a standing start.

It is already known from United States Patent 4081065 to provide an automatic electronic control for engagement of a friction clutch of an engine driven vehicle for starting the vehicle from a standing start. In the known control system, an electrical engine speed sensor produces an engine speed signal dependent on engine speed. A further signal dependent on engine throttle position is also produced. The differential with respect to time of the engine speed signal is derived to provide a measure of engine acceleration. A logic amplifier produces a clutch actuation signal in response to a combination of the engine speed signal, throttle position signal and engine acceleration signal. The clutch actuation signal operates a clutch actuator which in turn controllably engages the clutch. For a given throttle position, the degree of engagement of the clutch obviously controls engine speed and engine acceleration. By this means, the rate of engagement of the clutch for a given throttle position is controlled in such a way that engine acceleration decreases but remains positive as engine speed increases during clutch engagement.

The present invention is concerned with the provision of an improved control system for the friction clutch of the transmission of an engine driven vehicle for starting the vehicle from a standing start.

In accordance with the present invention there is provided a control system for a friction clutch of the transmission of an engine driven vehicle for starting the vehicle from a standing start comprising an electrical engine speed sensor that produces an engine speed signal dependent on engine speed; a reference signal generator that produces a reference signal, logic means responsive to the engine speed signal and reference signal and producing a clutch actuation signal, a clutch actuator and a clutch actuator position control responsive to the clutch actuation signal characterised in that the reference signal is set to correspond to a desired engine speed signal, that the logic means is a comparator arranged to compare the engine speed signal with the reference signal or a modified reference signal derived from the reference signal and from at least one other parameter and produces an error signal indicative of the difference between the so compared signals; and further characterised by a clutch position transducer providing a clutch position signal and a comparator arranged to compare the error signal and clutch position signal and provide and supply to the clutch actuator control a clutch actuation signal dependent on the error signal and clutch position signal whereby from a standing start the state of engagement of the clutch controls the engine speed and engine speed signal towards the desired engine speed and engine speed signal represented by the reference signal, thus maintaining a substantially constant engine speed.

By means of the present invention, when the engine throttle is opened to cause the vehicle to start from rest, the engine speed rises immediately to a level at which it is to be maintained during the period while the clutch is becoming engaged and the engine speed remains at this level until clutch engagement has been completed to the extent where no further clutch slip occurs.

Preferably, means are provided to adjust the reference signal depending upon the torque demand upon the engine of the vehicle so that as the vehicle torque demand increases the reference signal is caused to correspond with a higher engine speed.

In such a control system wherein a modified reference signal is compared with the engine speed signal, there may be provided a throttle position sensor that produces a throttle signal indicative of throttle opening and a summing junction for summation of the throttle signal and reference signal to form a modified reference signal.

A choke position indicator may provide a choke signal which varies according to the degree of choke and which is combined with the reference signal and throttle signal to produce the modified reference signal. The choke signal may be added to the reference signal prior to the reference signal being summed with the throttle signal.

A switching circuit may be connected between the error signal and the throttle position signal so that when the switching circuit is energised by a pre-determined imbalance between the engine speed signal and the modified reference signal, the switching circuit output signal is then utilised to modify the throttle signal and cause the clutch actuator control to remain in the state corresponding to a fully engaged clutch until the engine speed signal drops to a given value.

The throttle signal may vary with throttle opening such that maximum signal equates with no more than 50% throttle opening.

The invention will be described by way of example and with reference to the accompanying drawings in which:—

Fig. 1 is a schematic drawing of one embodiment of the invention;

Fig. 2 is a schematic drawing of the preferred embodiment of the invention;

Fig. 3 is a detailed circuit of the engine speed sensor in Fig. 2;

Fig. 4 is a detailed circuit of the limiter and switching circuit as utilised in Fig. 2 shown in their relationships to the difference amplifier 131 and comparator 113;

Fig. 5 is a detailed circuit of the phase-gain shaping network in Fig. 2;

Fig. 6 is a detailed circuit of the oscillator in Fig. 2;

Fig. 7 is a detailed circuit of the mark space ratio modulator of Fig. 2; and

Fig. 8 is an output as used in Fig. 2.

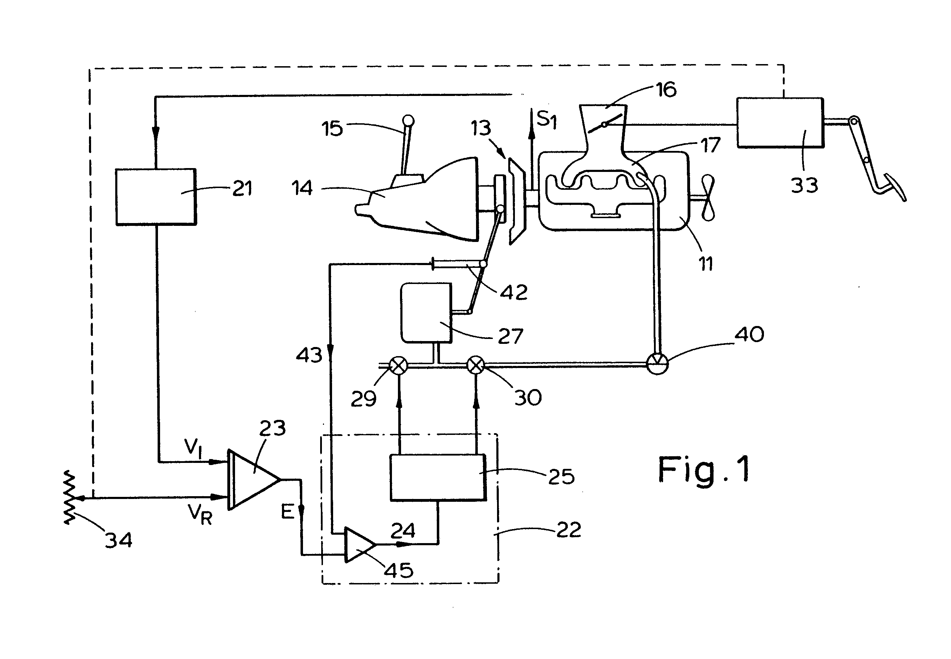

With reference to Fig. 1 of the drawings a conventional motor car has the usual engine 11, clutch 13, gearbox 14, gearshift lever 15, throttle 16 and an inlet manifold 17.

The engine speed is sensed by a transducer (not shown) which produces a signal $S_1$ representative of engine speed and a sensor 21 receives this signal and produces a voltage signal $V_1$ proportional to the engine speed. The voltage signal $V_1$ referred to as the engine speed signal is fed to a comparator 23 which measures the difference between the voltage $V_1$ and a voltage signal $V_R$ which is obtained from a reference signal generator 34, which is for example a potentiometer across the vehicle battery. The reference signal $V_R$ can be set to be the same value as a signal obtained via the sensor 21 at a particular engine speed for example 1000 r.p.m.

An error signal E which constitutes a clutch actuation signal is derived from the comparator 23 (constituting logic means) and is fed into a clutch position control 22 which controls the operation of an actuator 27. The actuator 27 operates the vehicle clutch 13 and is powered by means which may be pneumatic, hydraulic or electrical.

The clutch position control 22 comprises an actuator position control 25, a clutch position transducer 42, and a comparator 45. The position transducer 42 is coupled to the actuator output and produces a clutch position voltage signal 43 representative of the position of the clutch. This signal 43 is fed into the comparator 45 for comparison with the clutch actuation signal constituted by the error signal E. The difference signal 24 from the comparator 45 is fed into the actuator position control 25.

Taking a pneumatic actuator 27 by way of example, the actuator 27 may be connected to a vacuum source, for example, the inlet manifold 17 of an internal combustion engine 11, via solenoid valve 30, and non-return valve 40, causing the actuator 27 to move to engage the clutch. Alternatively the actuator 27 may be connected to atmosphere through solenoid valve 29 causing the actuator to move to release the clutch under the influence of an internal spring located in the actuator.

The actuator position control 25 causes either valve 29 or 30, depending upon the polarity of the difference signal 24, to be switched on and off rapidly at a fixed rate. The open time of these valves 29 and 30 is dependent on the amplitude of the difference signal 24. The open time for either valve 29 or 30 determines the velocity of the actuator 27 in the appropriate direction so that the actuator velocity is proportional to the difference signal 24. The actuator 27 operates so as to equalise the position signal 43 and the error signal E and reduce the difference signal 24 to zero. Consequently the actuator takes up a position dictated by the error signal E.

The error signal E determines the degree of engagement of the clutch. The clutch position control 22 operates the actuator 27 so as to vary the state of engagement of the clutch 13 with the engine 11 and thereby alter the engine speed to cause the engine speed signal $V_1$ to approach equivalence with the reference signal $V_R$ and make the error signal E approach zero.

When the engine speed signal $V_1$ is lower than the reference signal $V_R$ the clutch is disengaged. When $V_1$ is equal to $V_R$ the clutch is part engaged and when $V_1$ is greater than $V_R$ the clutch is fully engaged. The range of engine speed over which engagement takes place is determined by the overall system amplification. The degree of exactitude with which the error signal E approaches zero is determined by the gain in the system, i.e. the higher the gain the greater the exactitude. In addition, engagement of the clutch will load the engine, resulting in a reduction of speed and consequently more gradual clutch engagement.

The operation of the clutch control apparatus is as follows:—

From a standing start, the clutch position control 22 causes the clutch actuator 27 to disengage the clutch by venting the actuator to atmosphere through valve 29.

If the driver places the gearshift lever into first, or possibly second gear then, as the driver operates the throttle control 33 to increase the engine speed, once the engine speed increases so that the voltage $V_1$ approaches the reference voltage $V_R$ the actuator 27 will begin to engage the clutch 13. The error signal E activates the clutch position control 22 which in turn operates the actuator 27 so as to move the clutch 13 into engagement with the engine 11 to increase the torque load upon the engine through the friction clutch. This has the effect of holding down the engine speed and maintaining $V_1$ close to $V_R$.

When the vehicle is moving and the clutch fully engaged the engine speed will rise as the driver increases the throttle opening. When the engine speed exceeds some threshold speed, for example, 2000 r.p.m., the position control 22 causes the disengagement speed to be reduced to a value lower than the original engagement speed so that engine speeds lower than the original engagement speeds are permissible when in higher gears.

In order to make the control system responsive to varying torque demands from the engine, for example, start on a hill or towing a caravan it is necessary to make the reference signal vary accordingly, so that as the torque demand for a standing start increases (i.e. so that the engine does not stall), then the reference signal becomes equivalent to a higher engine speed.

One simple method of doing this is to utilise a variable potentiometer 34 fitted to the vehicle throttle control 33 as the reference generator, so that as the throttle opening increases the reference signal also increases and becomes equivalent to a higher engine speed. The connection between the throttle control 33 and the reference signal potentiometer 34 is shown by dotted lines in the drawing. The reference signal to throttle opening curve is not necessarily linear, and is shaped to give a maximum value at 50% of throttle opening.

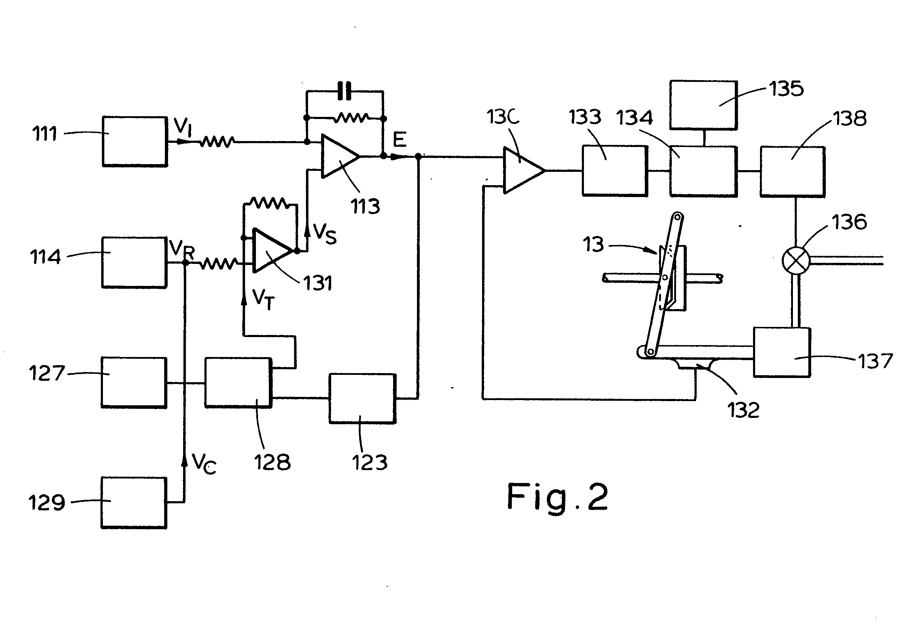

In Fig. 2 is illustrated a preferred control system that causes the reference signal to vary. Further the system operates so that once the clutch has engaged and the vehicle starts to move off then should the engine speed fall, say for example, because the vehicle is going up an incline, then the clutch will not be caused to disengage to equalise the reference and engine speed signals but will remain engaged below the reference until a predetermined minimum engine speed is reached.

The comparator 113 is equivalent to the comparator 23 in Fig. 1 and receives an engine speed signal $V_1$ and an input signal $V_S$ and measures the difference between the two signals $V_1$ and $V_S$ to produce an error signal E. The error signal E is positive when $V_1$ is less than $V_S$ and becomes negative when $V_1$ exceeds $V_S$. The error signal E from the comparator 113 is fed into a clutch position control which operates in a manner as previously described for Fig. 1.

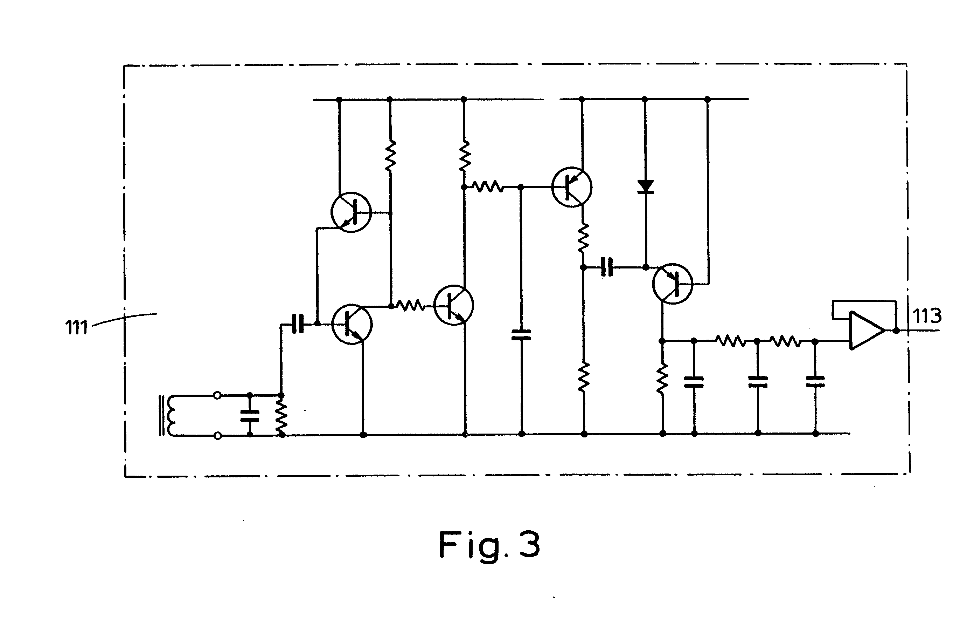

The vehicle engine speed is sensed by a sensor 111 that produces a voltage $V_1$ proportional to engine speed. The electrical circuit of the sensor is illustrated in detail in Fig. 3 but is basically a magnetic probe sensing the teeth on the engine flywheel and a transistor pump circuit. The input signal $V_S$ is derived from a difference amplifier 131 which adds together signals representing throttle opening and a fixed reference, $V_T$ and $V_R$ respectively.

The throttle position is sensed by a transducer 127 which is a variable potentiometer that produces a signal $V_T$ proportional to the throttle opening. The signal $V_T$ can be a positive signal which has a value proportional to throttle opening i.e. small value at light throttle and large value at full throttle. Alternatively, as utilised in the preferred embodiment, the signal $V_T$ can be proportional to throttle closure i.e. at light throttle opening the signal is at a maximum and at full throttle opening the signal has a minimum value. This relationship can be written as signal $V_T = k$ (1-throttle opening). The inverse relationship between the signal $V_T$ and the throttle opening is utilised because the signal $V_T$ is required in this form to control other functions in the vehicle gearbox.

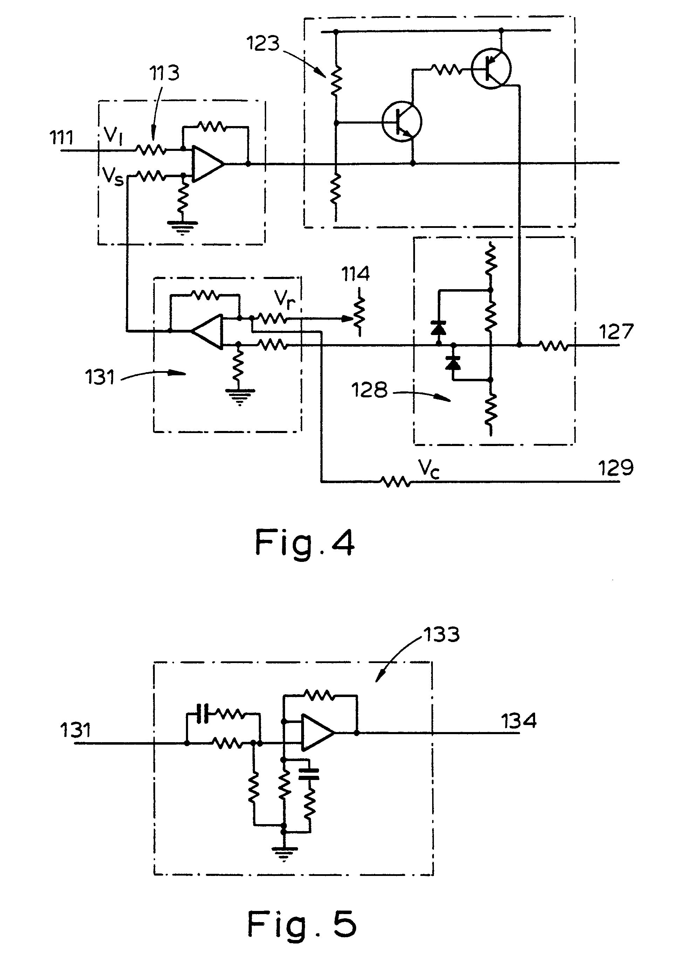

The throttle position transducer 127 is connected to a limiter 128 the action of which is to allow the throttle signal $V_T$ to vary only over a limited range say 10% to 50% of the throttle opening. The limiter 28 is disclosed in detail in Fig. 4 of the accompanying drawings. The signal $V_T$ is fed into an inverting input of a difference amplifier 131. The difference amplifier 131 also receives a reference signal voltage $V_R$ from a reference signal generator 114. As in Fig. 1 the reference signal generator 114 is a potentiometer across the vehicle battery. Because the throttle transducer 127 is connected in the reverse sense, producing maximum voltage for closed throttle conditions, the difference amplifier 131 acts as a summing junction to add the signals $V_T$ and $V_R$ together and produce a resultant input signal $V_S$ which is fed into the comparator 113.

The throttle transducer signal $V_T$ is utilised to modify the speed of the engine at which the error signal E changes from positive to negative.

At a moment of high torque demand e.g. on a hill start when $V_T$ is at a high value (because the throttle is part open), since $V_S = VT + V_R$ then $V_1$ must correspond to a high value of engine speed e.g. 1500 r.p.m. before the error signal is changed from positive to negative and therefore, the engine speed must be increased before the clutch is operated.

A switching circuit 123 is connected between the error signal E and the throttle signal $V_T$. When the negative value of error signal exceeds a predetermined amount the switching circuit is actuated. The switching circuit is shown in detail in Fig. 4 of the accompanying drawings. The switching circuit 123 changes the throttle signal $V_T$ at a value corresponding to a light throttle opening. When in the unenergised state the switching circuit has no loading effect on the signal $V_T$. Once the switching circuit has operated and the reference clamped to the light throttle value, the error signal increases, and consequently ensures that the reference remains clamped until the engine speed is reduced to that corresponding to the light throttle take-up value.

The effect of this is that on vehicle take-off on a hill when the clutch engages $V_1 = V_R + V_T$ at say 1500 r.p.m. as the engine speed increases and the E becomes negative, then if for some subsequent reason the engine speed drops the clutch will not disengage until the engine speed falls below 1000 r.p.m.

A choke position indicator 129 produces a signal $V_C$, preferably but not necessarily proportional to the degree of choke. The signal $V_C$ is combined with the reference signal $V_R$ prior to the reference signal being combined with the throttle position signal $V_T$. Hence if a degree of choke is required for starting the vehicle then the input signal $V_S$ is increased by the signal $V_C$ and the engagement speed for the clutch is increased to accommodate the higher idling speed of the engine.

The clutch position control comprises a comparator 130 equivalent to comparator 45 in Fig. 1, that receives the error signal E and a signal from a travel transducer 132 responsive to the clutch position control. The signal from the comparator 130 is then fed into a phase-gain shaping network 133, introduced to ensure the system stability, a mark space ratio modulator and oscillator, 134 and 135 respectively, and then utilised via an output 138 to control a solenoid operated hydraulic valve 136. The hydraulic valve 136 controls the hydraulic pressure in a hydraulic actuator 137. The mark/space ratio of the signal fed into the solenoid valve 136 determines the hydraulic pressure in the actuator and hence the state of engagement of the clutch.

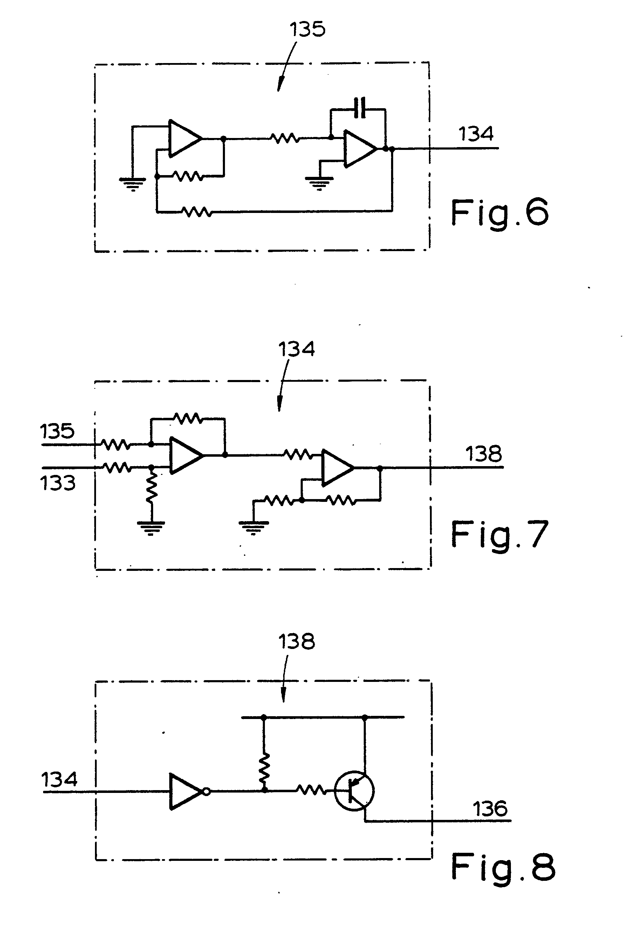

The shaping network 133, oscillator 135, mark space ratio network 134 and output are shown in detail in Figs. 6 to 8 respectively.

For the ease of understanding Figs. 3 to 8, the electrical terminals on each component are numbered according to component to which they are connected, e.g. in Fig. 3 the terminal 113 connects the engine speed sensor 111 to the comparator 113.

## Claims

1. A control system for a friction clutch (13) of the transmission of an engine driven vehicle for starting the vehicle from a standing start comprising an electrical engine speed sensor (21 or 111) that produces an engine speed signal $(V_1)$ dependent on engine speed; a reference signal generator (34 or 114) that produces a reference signal $(V_R)$, logic means (23 or 131) responsive to the engine speed signal $(V_1)$ and reference signal $(V_R)$ and producing a clutch actuation signal (E), a clutch actuator (27 or 137) and a clutch actuator position control (25 or 133 to 138) responsive to the clutch actuation signal (E) characterised in that the reference signal is set to correspond to a desired engine speed signal, that the logic means is a comparator (23 or 131) arranged to compare the engine speed signal with the reference signal $(V_R)$ or a modified reference signal derived from the reference signal and from at least one other parameter $(V_T)$ and produce an error signal (E) indicative of the difference between the so compared signals; and further characterised by a clutch position transducer (42 or 132) providing a clutch position signal (43) and a comparator (45 or 130) arranged to compare the error signal (E) and clutch position signal (43) and provide and supply to the clutch actuator control (25 or 133 to 138) a clutch actuation signal dependent on the error signal (E) and clutch position signal (43) whereby from a standing start the state of engagement of the clutch (13) controls the engine speed and engine speed signal $(V_1)$ towards the desired engine speed and engine speed signal $(V_1 = V_R)$ represented by the reference signal $(V_R)$, thus maintaining a substantially constant engine speed.

2. A control system as claimed in Claim 1, characterised in that means (34 or 127) are provided to adjust the reference signal $(V_R)$ depending upon torque demand upon the engine of the vehicle so that as the torque demand increases the reference signal $(V_R)$ is varied to correspond to a higher engine speed.

3. A control system as claimed in Claim 1 wherein a modified reference signal is compared with the engine speed signal characterised by provision of a throttle position sensor (127) that produces a throttle signal $(V_T)$ indicative of throttle opening, and a summing junction (131) for summation of the throttle signal $(V_T)$ and reference signal $(V_R)$ to form the modified reference signal $(V_S)$.

4. A control system as claimed in Claim 3, characterised in that a choke position indicator (129) provides a choke signal $(V_C)$ which varies according to the degree of choke and which is combined with the reference signal $(V_R)$ and throttle signal $(V_T)$ to produce the modified reference signal.

5. A control system as claimed in Claim 4, characterised in that the choke signal $(V_T)$ is added to the reference signal $(V_R)$ prior to the reference signal $(V_R)$ being summed with the throttle signal $(V_T)$.

6. A control system as claimed in any one of Claims 3 to 5 characterised in that a switching circuit (123) is connected between the error signal (E) and the throttle position signal $(V_T)$ so that when the switching circuit (123) is energised by a predetermined imbalance between the engine speed signal $(V_1)$ and the modified reference signal $(V_S)$, the switching circuit output signal is then utilised to modify the throttle signal $(V_T)$ and cause the clutch actuator control to remain in the state corresponding to a fully engaged clutch until the engine speed signal $(V_1)$ drops to a given value.

7. A clutch control as claimed in Claim 3, characterised in that the throttle signal $(V_T)$ varies with the throttle opening such that maximum signal equates with no more than 50% throttle opening.

## Patentansprüche

1. Steuersystem für eine Reibungskupplung (13) der Kraftübertragungseinrichtung eines motorbetriebenen Fahrzeugs zum Starten des Fahrzeugs aus dem Stand, mit einem elektrischen Motordrehzahlfühler (21 oder 111), der ein von der Motordrehzahl abhängiges Motordrehzahlsignal $(V_1)$ erzeugt, einem Bezugssignalgenerator (34 oder 114), der ein Bezugssignal $(V_R)$ erzeugt, einer Logikeinrichtung (23 oder 131), die auf das Motordrehzahlsignal $(V_1)$ und Bezugssignal $(V_R)$ anspricht und ein Kupplungsbetätigungssignal (E) erzeugt, einer Kupplungsbetätigungsvorrichtung (27 oder 137) und einer Vorrichtung (25 oder 133—138) zur Steuerung der Stellung der Kupplungsbetätigungsvorrichtung, die auf das Kupplungsbetätigungssignal (E) anspricht, dadurch gekennzeichnet, daß das Bezugssignal so eingestellt ist, daß es einem gewünschten Motordrehzahlsignal entspricht, daß die Logikeinrichtung ein Komparator (23 oder 131) ist, der dafür ausgebildet ist, das Motordrehzahlsignal mit dem Bezugssignal $(V_R)$ oder einem abgewandelten Bezugssignal zu vergleichen, das von dem Bezugssignal und von mindestens einem weiteren Parameter $(V_T)$ abgeleitet ist, um ein Fehlersignal (E) zu erzeugen, das den Unterschied zwischen den verglichenen Signalen anzeigt, und ferner gekennzeichnet durch einen Kupplungsstellungs-Meßgrößenumformer (42 oder 132), der ein Kupplungsstellungssignal (43) liefert, und einen Komparator (45 oder 130), der dafür ausgebildet ist, das Fehlersignal (E) mit dem Kupplungsstellungssignal (43) zu vergleichen und der Steuervorrichtung (25 oder 133—138) der Kupplungsbetätigungsvorrichtung ein Kupplungsbetätigungssignal zuzuführen, das von dem Fehlersignal (E) und dem Kupplungsstellungssignal (43) abhängig ist, wodurch der Einrückzustand der Kupplung (13) die Motordrehzahl und das Motordrehzahlsignal $(V_1)$ von einem stehenden Start aus auf die gewünschte Motordrehzahl und das Motordrehzahlsignal $(V_1 = V_R)$ zu steuert, das durch das Bezugssignal $(V_R)$ dargestellt wird, wobei somit eine im wesentlichen konstante Motordrehzahl aufrechterhalten wird.

2. Steuersystem nach Anspruch 1, dadurch gekennzeichnet, daß eine Einrichtung (34 oder 127) zum Einstellen des Bezugssignals $(V_R)$ in Abhängigkeit von der Drehmomentanforderung an den Motor des Fahrzeugs vorgesehen ist, so daß bei einer steigenden Drehmomentanforderung das Bezugssignal $(V_R)$ geändert wird, um einer höheren Motordrehzahl zu entsprechen.

3. Steuersystem nach Anspruch 1, wobei ein abgewandeltes Bezugssignal mit dem Motordrehzahlsignal verglichen wird, gekennzeichnet durch einen Drosselklappenstellungsfühler (127), der ein Drosselklappensignal $(V_T)$ erzeugt, das den Drosselöffnungsgrad anzeigt, und einen Summierknoten (131) zur Summierung des Drosselklappensignals $(V_T)$ und Bezugssignals $(V_R)$, um das abgewandelte Bezugssignal $(V_S)$ zu bilden.

4. Steuersystem nach Anspruch 3, dadurch gekennzeichnet, daß ein Starterklappenstellungsanzeiger (129) ein Starterklappensignal $(V_C)$ liefert, das sich entsprechend der Starterklappenstellung ändert und mit dem Bezugssignal $(V_R)$ und dem Drosselklappensignal $(V_T)$ kombiniert wird, um das abgewandelte Bezugssignal zu erzeugen.

5. Steuersystem nach Anspruch 4, dadurch gekennzeichnet, daß das Starterklappensignal $(V_T)$ dem Bezugssignal $(V_R)$ hinzugefügt wird, bevor das Bezugssignal $(V_R)$ mit dem Drosselklappensignal $(V_T)$ summiert wird.

6. Steuersystem nach einem der Ansprüche 3—5, dadurch gekennzeichnet, daß ein Umschaltkreis (123) zwischen dem Fehlersignal (E) und dem Drosselklappenstellungssignal $(V_T)$ geschaltet ist, so daß, wenn der Umschaltkreis (123) durch ein vorbestimmtes Ungleichgewicht zwischen dem Motordrehzahlsignal $(V_1)$ und dem abgewandelten Bezugssignal $(V_S)$ erregt wird, daß dann das Umschaltkreis-Ausgangssignal dazu verwendet wird, das Drosselklappensignal $(V_T)$ abzuwandeln und die Steuervorrichtung für die Kupplungsbetätigungsvorrichtung in dem Zustand zu belassen, der einer voll eingerückten Kupplung entspricht, bis das Motordrehzahlsignal $(V_1)$ auf einen gegebenen Wert abfällt.

7. Kupplungssteuerungssystem nach Anspruch 3, dadurch gekennzeichnet, daß das Drosselklappensignal $(V_T)$ sich mit dem Drosselklappenöffnungsgrad derart ändert, daß sich das Maximalsignal mit einem Drosselklappenöffnungsgrad von nicht mehr als 50 % ausgleicht.

**Revendications**

1. Système de commande pour un embrayage à friction (13) de la transmission d'un véhicule entrainé par un moteur pour démarrer le véhicule à partir d'un état d'arrêt, comprenant un capteur électrique de vitesse du moteur (21, 111) qui produit un signal $(V_1)$ de vitesse du moteur dépendant de la vitesse du moteur, un générateur (34, 114) de signal de référence qui produit un signal de référence $(V_R)$, un dispositif logique (23, 131) sensible au signal $(V_1)$ de vitesse du moteur et au signal de référence $(V_R)$ et produisant un signal (E) d'actionnement d'embrayage, un actionneur d'embrayage (27, 137) et une commande (25, 133 à 138) de position d'actionneur d'embrayage sensible au signal (E) d'actionnement d'embrayage, caractérisé en ce que le signal de référence est réglé de façon à correspondre à un signal de vitesse désirée du moteur, en ce que le dispositif logique est un comparateur (23, 131) agencé pour comparer le signal de vitesse du moteur au signal de référence $(V_R)$ ou à un signal de référence modifié dérivé du signal de référence et à partir d'au moins un autre paramètre $(V_T)$ et produire un signal d'erreur (E) indicatif de la différence entre les signaux ainsi comparés; et caractérisé en outre par un transducteur (42, 132) de position d'embrayage fournissant un signal (43) de position d'embrayage et un comparateur (45, 130) agencé pour comparer le signal d'erreur (E) et le signal (43) de position d'embrayage et fournir et appliquer à la commande (25, 133 à 138) d'actionneur d'embrayage un signal d'actionnement d'embrayage qui est fonction du signal d'erreur (E) et du signal (43) de position d'embrayage grâce à quoi à partir d'un état d'arrêt l'état d'engagement de l'embrayage (13) commande la vitesse du moteur et le signal $(V_1)$ de vitesse du moteur vers la vitesse désirée du moteur et le signal de vitesse du moteur $(V_1 = V_R)$ représenté par le signal de référence $(V_R)$, maintenant ainsi une vitesse à peu près constante du moteur.

2. Système de commande suivant la revendication 1, caractérisé en ce que des moyens (34, 127) sont prévus pour régler le signal de référence $(V_R)$ en fonction de la demande de couple sur le moteur du véhicule de façon que lorsque la demande de couple augmente le signal de référence $(V_R)$ soit modifié de façon à correspondre à une vitesse plus élevée du moteur.

3. Système de commande suivant la revendication 1 dans lequel un signal de référence modifié est comparé au signal de vitesse du moteur, caractérisé par le fait qu'il est prévu un capteur (127) de position du papillon des gaz qui produit un signal de papillon des gaz $(V_T)$ indicatif de l'ouverture du papillon des gaz, et une jonction de sommation (131) pour additionner le signal de papillon des gaz $(V_T)$ et le signal de référence $(V_R)$ de façon à former le signal de référence modifié $(V_S)$.

4. Système de commande suivant la revendication 3, caractérisé en ce qu'un indicateur (129) de position du volet d'air fournit un signal $(V_C)$ d'étranglement qui varie en fonction du degré d'étranglement et qui est combiné au signal de référence $(V_R)$ et au signal de papillon des gaz $(V_T)$ pour produire le signal de référence modifié.

5. Système de commande suivant la revendication 4, caractérisé en ce que le signal $(V_T)$ de volet d'air est additionné au signal de référence $(V_R)$ avant que le signal de référence $(V_R)$ soit additionné au signal $(V_T)$ de papillon des gaz.

6. Système de commande suivant l'une quelconque des revendications 3 à 5, caractérisé en ce qu'un circuit de commutation (123) est relié entre le signal d'erreur (E) et le signal de position $(V_T)$ du papillon des gaz de manière que lorsque le circuit de commutation (123) est excité par un déséquilibre prédéterminé entre le signal $(V_1)$ de la vitesse du moteur et le signal de référence modifié $(V_S)$, le signal de sortie du circuit de commutation est alors utilisé pour modifier le signal $(V_T)$ du papillon des gaz et astreint la commande d'actionneur de l'embrayage à démeurer dans l'état correspondant à un embrayage complet jusqu'à ce que le signal $(V_1)$ de vitesse du moteur tombe à une valeur donnée.

7. Commande d'embrayage suivant la revendication 3, caractérisée en ce que le signal $(V_T)$ du papillon des gaz varie avec l'ouverture du papillon des gaz de telle sorte que le signal maximal soit égal à pas plus que 50% de l'ouverture du papillon des gaz.

Fig.1

Fig.2

Fig. 3

Fig. 4

Fig. 5

Fig.6

Fig.7

Fig.8